## Europäisches Patentamt

## European Patent Office

## Office européen des brevets

(11) Veröffentlichungsnummer: **0 140 076**
**B1**

(12) # EUROPÄISCHE PATENTSCHRIFT

(45) Veröffentlichungstag der Patentschrift:
**16.03.88**

(51) Int. Cl.⁴: **C 04 B  35/58**

(21) Anmeldenummer: **84110751.9**

(22) Anmeldetag: **08.09.84**

(54) Verfahren zur Herstellung eines Siliziumnitridbauteils.

(30) Priorität: **12.10.83  DE 3337025**

(43) Veröffentlichungstag der Anmeldung:
**08.05.85 Patentblatt 85/19**

(45) Bekanntmachung des Hinweises auf die Patenterteilung:
**16.03.88 Patentblatt 88/11**

(84) Benannte Vertragsstaaten:
**DE FR GB IT NL SE**

(56) Entgegenhaltungen:
**WO-A-82/04245**
**GB-A-2 045 807**
**US-A-4 356 136**

**CHEMICAL ABSTRACTS, Band 99, Nr. 4, 25. Juli 1983, Seite 266, Nr. 26832s, COLUMBUS, OHIO, (US). J.R.G. EVANS et al.: "On the use of powder beds in the nitridation and subsequent densification of RBSN".**
**CHEMICAL ABSTRACTS, Band 85, Nr. 22, 29. November 1976, Seite 369, Nr. 165510j, COLUMBUS, OHIO, (US). V.M. SLEPTSOV et al.: "Strength and microstructure of materials based on silicon nitride".**

(73) Patentinhaber: **Feldmühle Aktiengesellschaft, Fritz- Vomfelde- Platz 4, D-4000 Düsseldorf 11 (DE)**

(72) Erfinder: **Gugel, Ernst, Prof Dr. Dipl.- Ing., Lauterburgstrasse 47a, D-8633 Rödental (DE)**
Erfinder: **Leimer, Gerhard, Dr. Dipl.- Ing., Ostlandstrasse 2, D-8633 Rödental 1 (DE)**

### Beschreibung

Die Erfindung betrifft ein Verfahren zur Herstellung eines Siliziumnitridbauteils entsprechend dem Gattungsbegriff des Hauptanspruches.

Bekanntlich hat sich dichtes Siliziumnitrid als Werkstoff für extrem hohe Beanspruchungen im Maschinenbau und im Hochtemperatureinsatz bereits ausgezeichnet bewährt. Ein Nachteil der bisher bekannten Werkstoffe dieser Art ist die Schwierigkeit ihrer Herstellung und der damit verbundene hohe Kostenaufwand. Bauteile aus dichtem Siliziumnitrid werden beispielsweise hergestellt, indem ein Siliziumnitridpulver achsial oder isostatisch heißgepreßt wird, wozu ein gewisser Anteil an oxidischen Sinterhilfsmitteln erforderlich ist. Der dabei hergestellte Rohling muß durch Bearbeitung mit Diamantwerkzeugen zu Endformen gestaltet werden, wobei die maschinelle Endbearbeitung außerordentlich aufwendig und die Herstellung komplexer Formen bisweilen gänzlich unmöglich ist.

Es ist weiter bekannt, Siliziumnitridpulver unter Zusatz einer erhöhten Menge von oxidischen Sinterhilfsmitteln zu Bauteilen zu formen und dann ohne Anwendung von Druck zu sintern. Nachteilig bei diesem Verfahren ist, daß der Sinterprozeß wegen der leichten Zersetzbarkeit des Siliziumnitrids bei den erforderlichen Sintertemperaturen in einem Siliziumnitrid und die Sinterhilfsmittel enthaltenden Pulverbett erfolgen muß. Sowohl das für die Gestaltung des Formkörpers erforderliche Pulver als auch jenes für die Schüttung ist relativ aufwendig, weil diese jeweils in einem gesonderten Arbeitsgang hergestellt werden müssen. Auch macht die Formgebung des Bauteils selbst mitunter Schwierigkeiten wegen der erforderlichen Feinkörnigkeit des Pulvers. Die Maßgenauigkeit des erhaltenen, gesinterten Bauteils ist unbefriedigend, da dieses Produkt während des Sinterprozesses einer linearen Schwindung von 15 bis 20 % unterliegt.

Aus der DE-C-28 55 859 ist ein Verfahren zur Herstellung eines gesinterten Siliziumnitrid-Gegenstandes bekannt, das sich zur Aufgabe gestellt hatte, einen Sinterprozeß zur Verfügung zu stellen, bei dem die thermische Zersetzung des Siliziumnitrids bei der Sinterungstemperatur begrenzt ist, ohne daß es notwendig ist, einen höheren Druck als atmosphärendruck anzuwenden und bei dem Bedingungen vorliegen, die es gestatten, daß Sinterprodukte mit hoher Dichte und Strukturhomogenität erhalten werden können. Dabei wird ein durch Reaktionssintern vorverdichteter Siliziumnitrid-Körper in einer Stickstoffgasatmosphäre bei Atmosphärendruck gesintert, wobei der Körper in eine aus Schutzpulver gebildete Umhüllung eingebettet ist, die Siliziumnitrid, Bornitrid oder ein Gemisch daraus und ein oder mehrere Sinteradditive des Siliziumnitrids in einer Menge von 3 bis 20 Gew.-% enthält. Das Schutzpulver soll dabei die Kontrolle der thermischen Dissoziationsreaktion des Siliziumnitrids während der Behandlung im Temperaturbereich von 1.600 bis 2.000°C ermöglichen. Das hinzugefügte Bornitrid wirkt dabei als Trennmittel zwischen Schutzpulver und eigentlichem Sinterkörper. Vorteilhaft bei diesem Verfahren ist die wesentlich geringere Schwindung beim Fertigsinterprozeß von 5 bis 6 % linear. Dagegen ist als Nachteil anzusehen, daß eine fertige Siliziumnitrid enthaltende Pulverschüttung eingesetzt wird, die beim Sintern durch das Schwinden zum Reißen und Abplatzen führt, wodurch die eigentliche Schutzwirkung der Schüttung nicht mehr gewährleistet ist. Ein weiterer wesentlicher Nachteil dieses Verfahrens ist der erhebliche Zeit- und Energieaufwand für den gesamten Herstellungsprozeß, da insgesamt 3 Ofenbrände benötigt werden:

zur Herstellung der Schüttung,

zur Herstellung des reaktionsgebundenen Formkörpers,

der eigentliche Sinterbrand im Pulverbett.

Diese drei Brennprozesse benötigen in derzeit üblichen Brenneinrichtungen in der vorgenannten Reihenfolge 5 bis 7 Tage für die Herstellung der Schüttung, 7 bis 10 Tage für die Herstellung des reaktionsgebundenen Vorkörpers und 1 bis 2 Tage für den eigentlichen Sinterbrand, also insgesamt 13 bis 19 Tage.

Die WO-A-82 04 245 beschreibt die Herstellung von Siliziumnitridkörpern unter Verwendung einer Silizium und Siliziumnitrid enthaltenden Pulvermischung. Die Kapselung der vorgeformten Körper erfolgt dabei in einer Pulverbettschüttung aus Siliziumnitrid, Aluminiumoxid und Aluminiumnitrid. Gemäß dieser Schrift wird es auch für durchführbar gehalten, die Nitrierung im Sinterofen durchzuführen, um zwischen Formgebung der Körper und abschließendem Sinterprozeß ein Manipulieren der Formkörper auszuschließen. Zur Erreichung einer ausreichend hohen Dichte wird eine gemeinsame Mahlung von Silizium und Siliziumnitridpulver auf eine Korngröße von < 1 μm vorgeschlagen. Der dafür erforderliche Mahlaufwand ist als nachteilig anzusehen.

Gemäß der Literaturstelle: Chemical Abstracts, Band 85, 1976, Seite 369, Nr. 165510j, wird eine Pulverbettschüttung aus Bornitrid und Silizium zum Sintern von aus Siliziumnitrid, Siliziumnitrid und Siliziumkarbid, jeweils unter Zusatz von Magnesiumoxid vorgeschlagen. Die gleiche Literaturstelle sieht für ein Reaktionssinterverfahren, bei dem Mischungen aus Siliziumnitrid und Silizium bzw. Siliziumkarbid und Silizium verwendet werden, Temperaturen von 1300 bzw. 1700°C und einen Stickstoffdruck von 30 Atm 29,4 bar vor. Obwohl die Biegebruchfestigkeiten des reaktionsgesinterten Siliziumnitridmaterials vergleichbar mit heißgepreßtem Siliziumnitrid sein sollen, hat sich zwischenzeitlich für besonders hohe Beanspruchungen das reaktionsgesinterte Siliziumnitrid als noch nicht ausreichend fest und dicht genug erwiesen.

Schließlich ist aus der US-A-43 56 136 ein Verfahren zur Verdichtung von reaktionsgesinterten Siliziumnitridformkörpern bekannt. In diesem Zweistufenverfahren werden die nitridierten Körper in einem zweiten Schritt mit einer Packung im wesentlichen aus Siliziumnitrid und einem Metalloxid, z. B. $Y_2O_3$, versehen und zunächst bei niedrigem Stickstoffdruck und anschließend bei höherem Stickstoffdruck bei jeweils gleichzeitiger Aufheizung behandelt. Dieses Verfahren weist die bereits eingangs beschriebenen Nachteile einer komplizierten Verfahrensführung auf.

Aufgabe der vorliegenden Erfindung ist es nun, ein Verfahren zur Herstellung von Siliziumnitridbauteilen zu schaffen, das die oben aufgeführten Nachteile vermeidet und die Herstellung ggf. auch komplex gestalteter Bauteile mit wesentlich geringerem Zeit- und Energieaufwand erlaubt.

Die Lösung dieser Aufgabe erfolgt erfindungsgemäß bei einem Verfahren gemäß dem Gattungsbegriff des Patentanspruches 1, durch die Verfahrensschritte, wie sie im kennzeichnenden Merkmal dieses Patentanspruches angegeben sind.

Der Vorteil des erfindungsgemäßen Verfahrens liegt darin, daß aus dem Ausgangspulvergemisch für das herzustellende Siliziumnitridbauteil nach bekannten und technisch bewährten Formgebungsarten zunächst ein grüner Formkörper ausgeformt wird, ohne daß hierbei auf eine besonders hohe Grünverdichtung geachtet werden muß. Ein niedriger Verdichtungsgrad hat sogar später noch beschriebene Vorteile. Dieser grüne Formkörper wird dann mit einer Schüttung aus handelsüblichem, preiswerten Siliziumpulver, an das keine großen Anforderungen bezüglich Reinheit und Korngrößenverteilung gestellt werden und üblichen oxidischen Sinterhilfsmitteln und üblichen Trennmitteln umhüllt. Bei dem nachfolgenden Brand in einer Stickstoffschutzgasatmosphäre erfolgt nun ggf. nach der Beseitigung temporärer Plastifizierungsmittel zunächst eine Umwandlung des Siliziums zu Siliziumnitrid. Aufgrund der nur geringen notwendigen Verdichtung und des Gehalts an Siliziumnitrid und oxidischen Sinterhilfsmitteln des grünen Formkörpers ist die bei der Herstellung des reaktionsgesinterten Siliziumnitrids bekannte problematische Wärmeentwicklung, die zum ausschmelzen von Siliziummetall aus dem Formkörper führen kann, so gering, daß eine relativ kurze Halteperiode für die Fertignitridierung sowohl des Formkörpers als auch der Umhüllung ausreicht, wobei die erst während des Brandes sich aus Siliziumpulver bildende Siliziumnitridumhüllung wesentlich kompakter und dichter als eine bisher übliche Pulverschüttung und rißfrei ist und damit einen besseren Schutz vor Zersetzung für die zu sinternden Bauteile bildet als eine von Anfang an aus Siliziumnitridpulver bestehende Umhüllung. Wird nämlich eine Umhüllung aus Siliziumnitridpulver eingesetzt, so kann mit dieser entsprechend der Schüttdichte eine Raumerfüllung von nur ca. 30 % erreicht werden. Bei erfindungsgemäßer Verwendung von Siliziumpulver als Umhüllung erreicht die Raumerfüllung infolge der inneren Volumenzunahme beim Nitridieren ca. 50 %. Diese Zunahme der Raumerfüllung wirkt sich als Schutz gegen die Zersetzung besonders vorteilhaft aus, da zugleich eine Rißbildung in der Umhüllung vermieden wird, so daß eine Ausschußgefährdung der herzustellenden Bauteile erheblich reduziert werden kann.

In einer vorteilhaften Ausgestaltung des Verfahrens wird der grüne Formkörper mit einer Umhüllung versehen, die aus zwei Schichten aufgebaut ist. Die innere, dem grünen Formkörper benachbarte Schicht, besteht aus dem Trennmittel Bornitrid, die äußere, über der Bornitrid-Schicht befindliche Schicht besteht aus Siliziumpulver und besonders geeigneten Sinterhilfsmitteln, wie Yttriumoxid und Aluminiumoxid. Eine solche zweischalige Umhüllung führt während des Nitridierens bzw. Sinterns aufgrund der besonders geeigneten Sinterhilfsmittel infolge des Schwindens der äußeren Umhüllungsschicht zu einer weitestgehenden Gasdichtigkeit, so daß die nachfolgende heißisostatische Preßnachbehandlung zu einer besonders guten Verdichtung und Festigkeitssteigerung führt. Das Auftragen der zweischaligen Umhüllung kann nach üblichen Verfahren, wie Aufpinseln oder Aufpudern, erfolgen.

Besonders bevorzugt wird der grüne Formkörper zunächst mit einem ersten Schlicker aus Bornitrid beschichtet. Nach dem Trocknen des ersten Schlickers wird ein zweiter Schlicker aus Siliziumpulver und besonders geeigneten Sinterhilfsmitteln aufgetragen und wiederum getrocknet. Der so zweischalig umhüllte grüne Formkörper wird anschließend in Stickstoffatmosphäre in einem Ofen bei einer Temperatur von 1.200 bis 1.400° C nitridiert. Durch die Anwendung der Schlicker zur zweischaligen Umhüllung läßt sich die Raumerfüllung der Umhüllung nach dem Nitridieren bis ca. 80 % erhöhen, so daß nach dem Sinterbrand eine besonders gute Gasdichtheit der zweischaligen Umhüllung erhalten wird.

Bei einer ganz bevorzugten Ausführung des Verfahrens wird das Bauteil mit den vorgenannten Schlickern zunächst umhüllt und dann in eine heißisostatische Presse eingebracht. Dann wird wiederum in einem Brennzyklus nitridiert, bis zur Gasdichtigkeit der Umhüllung gesintert und anschließend heißisostatisch gepreßt.

Die Erfindung wird an den folgenden Beispielen näher erläutert, ohne daß sie auf die Beispiele beschränkt ist:

**Vergleichsbeispiel:**

Aus einem Versatz aus 100 Gewichtsteilen Siliziumpulver, 8 Gewichtsteilen Yttriumoxidpulver, 2 Gewichtsteilen Aluminiumoxidpulver und 5 Gewichtsteilen Siliziumnitridpulver wird ein grüner Formkörper mit einer Dichte von 1,3 g/cm³ hergestellt. Das Siliziumpulver weist dabei eine Korngröße von kleiner als 30 μm auf, die Korngröße der weiteren Zusatzpulver ist kleiner als 1 μm. Der grüne Formkörper wird mit einer Umhüllung versehen, die aus 61 Gew.-% handelsüblichem Siliziumpulver, 9,5 Gew.-% Yttriumoxidpulver und 29,5 Gew.-% Bornitridpulver besteht. Formkörper und Umhüllung werden in einem Ofen unter Stickstoffgasatmosphäre bei Normaldruck zunächst während 7 Stunden bei einer Temperatur von 1.200 bis 1.400° C nitridiert, wobei die Temperatur während dieser Zeit linear ansteigt. Zur anschließenden Sinterung wird die Temperatur bis zur Erreichung der Endtemperatur von 1.720 bis 1.760° C linear gesteigert und dann 2 Stunden gehalten. Der gesinterte Formkörper erlitt durch das Sintern eine lineare Schwindung von 6,5 % und keinen Gewichtsverlust. Letzteres weist auf die gute Schutzwirkung der Umhüllung hin. Die Biegefestigkeit des Materials wurde zu 610 N/mm² festgestellt.

**Beispiel**

Ein entsprechend Beispiel 1 hergestellter grüner Formkörper wird mit einem ersten Schlicker aus 100 Gewichtsteilen Bornitrid und einem zweiten Schlicker aus 100 Gewichtsteilen Siliziumpulver, 8 Gewichtsteilen Yttriumoxidpulver und 2 Gewichtsteilen Aluminiumoxidpulver umhüllt. Nach Einbringen des umhüllten grünen Formkörpers in eine heißisostatische Presse wird zunächst unter Stickstoffzufuhr bei Normaldruck nitridiert. Dabei ergibt sich aufgrund der Schlickeranwendung eine Raumerfüllung der zweischaligen Umhüllung von 76 %, so daß aufgrund dieser höheren Raumerfüllung der Nitridierprozeß bei einer Temperatur von 1.200 bis 1.400° C auf 24 Stunden ausgedehnt werden muß, damit eine vollständige Nitridierung von Umhüllung und grünem Formkörper gewährleistet ist. Der daran anschließende Sinterprozeß bei 1.720 bis 1.760° C während 2 Stunden ergibt aufgrund der Zugabe von Aluminiumoxidpulver zur äußeren Umhüllung eine Schwindung dieser Umhüllung bis zur Gasdichtheit. Die erzielte Gasdichtheit wird in einer anschließenden heißisostatischen Preßnachbehandlung dazu benutzt, den Prüfkörper weiter zu verdichten und seine Festigkeit zu steigern. Ein so behandelter Prüfkörper weist eine Biegebruchfestigkeit von 670 N/mm² auf, wobei die Herstellung nur in einem einzigen Arbeitsgang erfolgt ist.

**Patentansprüche**

1. Verfahren zur Herstellung eines Siliziumnitridbauteils, bei dem ein im wesentlichen aus Siliziumpulver, mindestens 5 Gew.-% Siliziumnitridpulver, Sinterhilfsmitteln und temporären Plastifizierungsmitteln gebildeter grüner Formkörper, der mit einer Umhüllung versehen ist, mitsamt seiner Umhüllung in einem Ofen unter Stickstoffzufuhr in einem einzigen Brennzyklus zunächst nitridiert und dann gesintert wird, dadurch gekennzeichnet, daß die Umhüllung aus Siliziumpulver, an sich bekannten oxidischen Sinterhilfsmitteln und bekannten Trennmitteln gebildet wird und der so umhüllte grüne Formkörper bis zur Gasdichtigkeit einer über einer Trennmittelschicht liegenden äußeren Schicht der Umhüllung gesintert und daran anschließend einer heißisostatischen Pressnachbehandlung zur Verdichtung des gesinterten Formkörpers unterzogen wird.

2. Verfahren nach Anspruch, 1 dadurch gekennzeichnet, daß der grüne Formkörper mit einer Umhüllung versehen wird, die aus zwei Schichten besteht, wobei die innere Schicht aus Bornitrid und die äußere Schicht aus Siliziumpulver und bekannten oxidischen Sinterhilfsmitteln gebildet wird.

3. Verfahren nach einem der Ansprüche 1 und 2, dadurch gekennzeichnet, daß zur Ausbildung der Umhüllung der grüne Formkörper zunächst mit einem ersten Schlicker aus Bornitrid beschichtet wird, der erste Schlicker getrocknet und dann ein zweiter Schlicker aus Siliziumpulver und bekannten oxidischen Sinterhilfsmitteln aufgetragen und getrocknet wird.

4. Verfahren nach einem der Ansprüche 1 bis 3, dadurch gekennzeichnet, daß das Nitridieren, Sintern und heißisostatische Pressen zur Nachverdichtung des Formkörpers in einem einzigen Arbeitsgang in einer heißisostatischen Presse erfolgt.

**Claims**

1. Process for the manufacture of a silicon nitride component in which a green shaped article formed substantially from silicon powder, at least 5 % by weight silicon nitride powder, sintering auxiliaries and temporary melting agents and provided with a coating is together with its coating, first of all nitrided and then sintered in a single firing cycle in a furnace in the presence of nitrogen, characterised in that the coating is formed from silicon powder, oxidic sintering auxiliaries known per se and known parting agents, and the green shaped article coated in this manner is sintered until an outer layer of the coating positioned over a layer of parting agent is gas-tight, and then subjected to hot isostatic pressing after-treatment in order to compact the sintered shaped article.

2. Process according to claim 1, characterised in that the green shaped article is provided with a coating that comprises two layers, the inner layer being formed from boron nitride and the outer layer from silicon powder and known oxidic sintering auxiliaries.

3. Process according to claim 1 or claim 2, characterised in that in order to form the coating the green shaped article is first of all coated with a first slip of boron nitride, the first slip is dried and then a second slip of silicon powder and known oxidic sintering auxiliaries is applied and dried.

4. Process according to any one of claims 1 to 3, characterised in that the nitriding, the sintering and the hot isostatic pressing for the purpose of subsequently compacting the shaped article take place in a single operating cycle in a hot isostatic press.

## Revendications

1. Procédé de préparation d'un corps en nitrure de silicium, au cours duquel un corps moulé cru, formé pour l'essentiel de poudre de silicium, d'au moins 5 % en poids de poudre de nitrure de silicium, d'adjuvants de frittage et d'agents temporaires de plastification, et qui est pourvu d'un enrobage, est tout d'abord nitruré et ensuite fritté, avec son enrobage, en un seul cycle de combustion, dans un four et sous courant d'azote, procédé caractérisé en ce que l'enrobage est constitué de poudre de silicium, d'adjuvants de frittage connu en soi, oxydes de nature, et d'agents connus de séparation, et en ce que le corps moulé cru ainsi enrobé est fritté jusqu'à étanchéité aux gaz d'une couche extérieure d'enrobage, recouvrant une couche d'agent de séparation, et ensuite soumis à un traitement ultérieur de compression isostatique à chaud, pour la densification du corps moulé fritté.

2. Procédé conforme à la revendication 1, caractérisé en ce que le corps moulé cru est pourvu d'un enrobage qui est constitué de deux couches, la couche intérieure étant constituée de nitrure de bore, et la couche extérieure, d'une poudre de silicium et d'adjuvants connus de frittage, oxydes de nature.

3. Procédé selon l'une des revendications 1 et 2, caractérisé en ce que, pour former l'enrobage, on recouvre tout d'abord le corps moulé et cru d'une couche d'une première barbotine de nitrure de bore, on sèche cette première barbotine, et on applique ensuite une seconde barbotine de poudre de silicium et d'adjuvants connus de frittage, oxydes de nature, et on la sèche.

4. Procédé selon l'une des revendications 1 à 3, caractérisé en ce que la nitruration, le frittage et la compression isostatique à chaud pour la densification du corps moulé sont effectués en une seule phase de travail dans une presse isostatique travaillant à chaud.